Europäisches Patentamt

European Patent Office

Office européen des brevets

(11) Publication number : **0 493 907 A1**

(12) **EUROPEAN PATENT APPLICATION**

(21) Application number : **91311498.9**

(22) Date of filing : **11.12.91**

(51) Int. Cl.⁵ : **B26D 7/24, F16P 3/16, H01H 3/14**

(30) Priority : **13.12.90 GB 9027066**

(43) Date of publication of application :
**08.07.92 Bulletin 92/28**

(84) Designated Contracting States :
**DE DK ES FR GB IT**

(71) Applicant : **DVSG ENGINEERING UND PATENTVERWALTUNGS GmbH
Westerbachstrasse 47
W-6000 Frankfurt am Main 1 (DE)**
(84) **DK FR IT**

(71) Applicant : **USM ESPANA, S.A.
Apartado 3174 Berenguer de Palou, 64
E-08027 Barcelona (ES)**
(84) **ES**

(71) Applicant : **DEUTSCHE VEREINIGTE SCHUHMASCHINEN GmbH
Postfach 94 01 66 Westerbachstrasse 47
W-6000 Frankfurt/Main-94 (DE)**
(84) **DE**

(71) Applicant : **SAMCO-STRONG LIMITED
P.O. Box 129 Ross Walk
Belgrave Leicester LE4 5BY (GB)**
(84) **GB**

(72) Inventor : **Berny, Hans-Jürgen
Lärchenweg 11
W-6056 Heusenstamm 2 (DE)**
Inventor : **Bergstrasse Werner
Pestalossistrasse 10
W-6074 Rodermark (DE)**
Inventor : **Rohlander, Emil
Im Bubenhain 14
W-6236 Eschborn (DE)**

(74) Representative : **Atkinson, Eric et al
c/o British United Shoe Machinery Limited
P.O. Box 88 Ross Walk Belgrave
Leicester LE4 5BX (GB)**

(54) Cutting press having movable cutting head.

(57) At each side of the cutting head (38) is mounted a pad arrangement (60), each comprising two pads (62, 64) of a compressible, resilient, electrically conductive material, held separated by spaced-apart ribs (66) also of a compressible material, the arrangement being such that when either of the pad arrangements is compressed, an electrical circuit is made and a signal is thus generated in response to which a cutting stroke of the press is prevented by disabling the motor (18, 20) by which cutting strokes are generally effected. In addition, in response to the signal break means is applied to arrest any lateral movement of the cutting head (38).

Fig. 3

This invention is concerned with a cutting press comprising a cutting bed, a cutting head movable between an operative position, in which it is in opposed relationship with a cutting die placed on the cutting bed, and an out-of-the-way position, in which the operator has access to such cutting die, and drive means for effecting relative movement of approach between the cutting head and the cutting bed whereby, when the cutting head is in its operative position, a cutting stroke of the press can be effected. The invention is thus applicable to so-called "travelling head" cutting presses and also "receding platen" cutting presses, but is particularly, but not exclusively, concerned with so-called "swing beam" cutting presses wherein the cutting head is constituted by a swing beam mounted on a column for swinging movement between its operative and out-of-the-way positions.

Cutting presses of all kinds require some form of guarding in order to prevent access by a party other than the operator from the area in which the cutting head is moved and at which it effects its cutting stroke, and in addition some form of actuator arrangement is generally provided whereby the hands of the operator must be outside such region when a cutting stroke is to be effected, e.g. a so-called two-hand trip arrangement. In this way the risk of damage to the operator or any third party can be avoided. The main risk of damage is of course that of trapping a hand against a cutting die during the cutting stroke, which could have serious consequences, but in addition in the case of cutting presses having movable cutting heads, as referred to above, there is also a danger to third parties by the cutting head movement, if such third parties are allowed access to the region of such movement, and in addition of course it is possible for the operator to trap his hand between the cutting head and a cutting die placed on the cutting bed during such movement. The risk of trapping in this way arises not only where the movement of the cutting head is effected under power, furthermore, but also when it is effected manually.

There have of course been many proposals for a guarding extending around the lower edge of the cutting head of a cutting press, but these are either "solid" with the cutting head, with the result that the guarding itself can deliver a damaging blow and does not necessarily prevent trapping of the operator's hand against a cutting die, albeit while preventing serious damage by preventing a cutting stroke from taking place, or are otherwise highly compressible, e.g. in the form of an inflatable bag, which is slow to respond and furthermore which, in order to be effective, has to be relatively large, thus interfering with the operator's view of the operating position of the cutting bed, quite apart from other disadvantages of its bulk.

It is thus one of the various objects of the present invention to provide an improved cutting press having a movable cutting head in which guarding is provided which affords a cushioning effect upon striking an obstruction in the path of movement of the cutting head, but which is not so large as to impede the operator's view of the operating position, and which at the same time when actuated disables the press from causing serious damage to the operator or other party causing the obstruction.

One cutting press in accordance with the invention is hereinafter described in detail, said cutting press comprising a cutting bed, a cutting head movable between an operative position, in which it is in opposed relationship with a cutting die placed on the cutting bed, and an out-of-the-way position, in which the operator has access to such cutting die, and drive means for effecting relative movement of approach between the cutting head and the cutting bed, thus to effect a cutting stroke of the press, wherein sensor means is provided comprising, on each side of the cutting head, a pad arrangement comprising two pads of resilient and electrically conductive material held separated by spaced-apart rib portions, each such pad arrangement being effective, when compressed, e.g. by engagement thereof with an obstruction in the path of movement of the cutting head, to make an electrical circuit and thus to generate a signal in response to which the drive means is disabled to prevent a cutting stroke of the press from being effected.

It will thus be appreciated that the resilient material of the pads affords a good cushioning effect when they strike against an obstruction in the path of movement of the cutting head and also serve, when the pad arrangement is compressed, to prevent a cutting stroke of the press, so that serious damage to an operator or third party is readily avoided. Moreover, the overall thickness of each pad arrangement preferably does not exceed 30mm, and moreover in the region of the striker plate of the cutting head (i.e. around the lower edge thereof) the edge of each pad is chamfered, rounded or the like. It has been found that in this way the view of the operator over the operating area of the cutting bed is relatively unimpeded by the pad arrangement.

In addition to disabling the drive means in response to a signal generated by compression of the pad arrangement, preferably also brake means is provided by which, in response to said signal, movement of the cutting head is arrested. Preferably, furthermore, the brake means is effective so as to arrest the movement of the cutting head within a distance which is not greater than the variation in the thickness of the pad arrangement when it is compressed. In this way effectively the pad cushions the whole of the impact of the moving cutting head against an obstruction and, by the time the pad arrangement is fully compressed, the movement of the cutting head has been terminated.

As previously mentioned, the present invention is applicable to cutting presses where the cutting head is moved by manually applied force, in a preferred embodiment of the invention, however, further drive means is provided for effecting movement of the cutting head between its operative and out-of-the-way positions. In such a cutting press, furthermore, preferably in response to a signal being generated as aforesaid when the cutting head is being moved under the operation of the further drive means, such operation of said further drive means is discontinued. Moreover, the further drive means preferably applies a force to the cutting head to move it as aforesaid which force is such that in response to a signal being generated as aforesaid movement of the cutting head under the operation of the further drive means is arrested within a distance not greater than the variation in the thickness of the pad arrangement when it is compressed.

It will of course be appreciated that the arresting of the movement of the cutting head in this way may be accompanied by the application of the brake means.

As has previously been mentioned, it is conventional in cutting presses having a movable cutting head to provide an operator-actuatable two-hand trip arrangement for controlling the operation of the drive means by which relative movement of approach is effected between the cutting head on the cutting bed, thus to ensure that the operator's hands are out of the operating locality during a cutting stroke. In certain cases, however, notably where the cutting stroke does not exceed 8mm, it is customary in certain countries to utilise a so-called single-hand trip, i.e. a trip arrangement where only one hand of the operator is required to actuate a button or the like, leaving the other hand of the operator free. It will of course be appreciated that this freedom does give rise to the possibility of the operator's hand being in the operating locality during the cutting stroke, but it is generally considered that where the cutting stroke does not exceed 8mm, no serious danger arises. It has been found that the use of a pad arrangement as referred to above in combination with a single-hand trip arrangement enhances significantly the safety of the arrangement in comparison with reliance merely upon the cutting stroke not exceeding 8mm.

There now follows a detailed description, to be read with reference to the accompanying drawings, of one swing beam press in accordance with the invention. It will of course be appreciated that this swing beam press has been selected for description merely by way of illustration of the invention and not by way of limitation thereof, and in particular it will be appreciated that the invention is applicable to the cutting presses having a movable cutting head of whatever type, and is applicable to presses whether the movement of the head is effected under power or not.

In the accompanying drawings:-

Figure 1 is a side view, with parts broken away, of the cutting press which is now to be described;

Figure 2 is a fragmentary view taken along the arrow II of Figure 1, and showing details of an operator-actuatable switch arrangement of the press; and

Figure 3 is a fragmentary view of a sensor pad mounted on the side of a swing beam of the press shown in Figure 1.

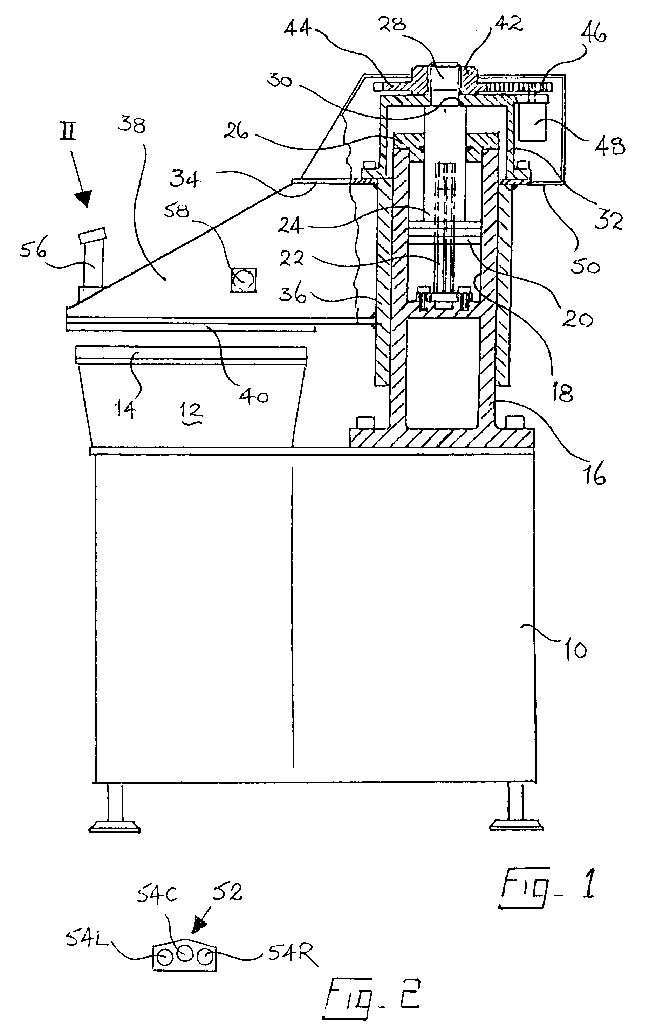

The cutting press shown in Figure 1 is a swing beam cutting press comprising a base 10 which supports a cutting table or bed 12, a cutting surface of which is provided by a cutting pad 14 supported on the bed. Secured on the base 10, rearwardly of the cutting bed 12, is an upstanding column 16 which is hollow and the upper end of which constitutes a cylinder 18 forming part of a hydraulic piston-and-cylinder arrangement the piston 20 of which is mounted for heightwise sliding movement in the cylinder when hydraulic fluid is applied thereto. The piston is secured against rotation in the cylinder by means of a splined shaft 22 fixedly secured to the base of the cylinder and projecting through, and mating with, a complementarily shaped bore in the piston. The piston carries an upwardly extending piston rod 24 which projects through an end cap 26 of the cylinder 18 and has at its upper end a portion of reduced diameter 28, thus providing an annular support surface 30 on which a housing 32 is carried. The housing 32 is bolted to a plate 34 which is turn is welded to a sleeve 36 slidable heightwise on the outside of the column 16. The plate 34 also constitutes the top plate of a swing beam 38 which is also welded or otherwise secured to the sleeve 36. The swing beam 38 carries a striker plate 40 on its underside. It will thus be appreciated that upon admission of hydraulic fluid to the lower end of the cylinder 18, the piston rod is moved upwardly lifting the housing 32, sleeve 36 and swing beam 38 upwards, thus to move the swing beam to a rest condition, while admission of fluid under pressure to the upper end of the cylinder 28 is effective to cause a cutting stroke to take place.

The reduced diameter portion 28 of the piston rod 24 is threaded and threadedly receives a nut 42 which is formed integral with a gear 44. Meshing with the gear 44 is further gear 46 carried on a drive shaft of a d.c. motor 48 mounted on the outside of the housing 32. The plate 34 carries a cover 50 which shrouds the gears 44, 46, the housing 32 and motor 48. Upon the supply of drive signals to the d.c. motor 48 causing rotation of the gear 46 to take place, the gear 46 thus runs around the circumference of the gear 44 fixed on the piston rod 24, thereby moving the housing 32 and thus the swing beam 38 about the axis provided by the piston rod.

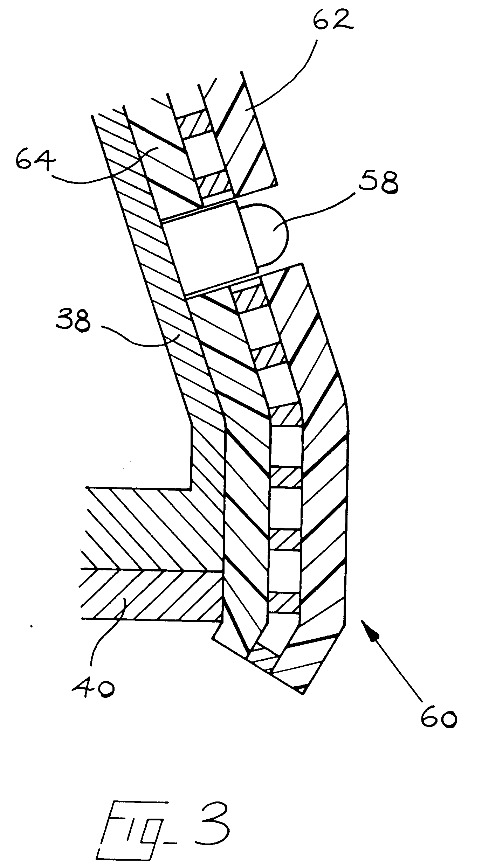

For controlling operation of the motor 48 (constituting first drive means of the press) and also the supply of hydraulic fluid to the cylinder 18 (constituting, with its piston 20, second drive means of the press), first a switch arrangement generally designated 52 (Figure 2), comprising three switches 54, is provided mounted in a handle 56 on the swing beam 38, together with an actuator arrangement comprising two buttons 58 arranged one at each side of the swing beam 38. These two arrangements are so interconnected that:

– Actuation of either one of the buttons 58 alone will be effective to cause motor 48 to be actuated for a pre-set time period to drive the swing beam 38 through a limited distance in a direction towards the hand operating the button;

– Actuation of the left-hand switch 54L or the right-hand switch 54R alone is effective to cause the motor 48 to move the swing beam 38 respectively to the left or to the right, such movement continuing while the switch remains actuated (up to a stop (not shown)).

– Operation, when a single-hand trip mode has been selected, of either one of the switches 54R, 54L within a pre-set time period (in the press now being described 500 milliseconds) following release thereof after its operation to cause swinging movement to be effected as aforesaid, will cause motor 18, 20 to operate to effect a cutting stroke of the press;

– Operation of one of the switches 54 simultaneously with one of the buttons 58, when a two-hand trip mode has been selected, will cause a cutting stroke of the press to be effected, i.e. by operation of the motor 18, 20.

It should also be noted that, in a manner which is already known, the depth of penetration of a cutting die, i.e. the depth to which a cutting die is driven through material, which is supported on the cutting pad 14 and over which the cutting die is then placed, into the cutting pad 14 can be selectively varied according to which one of the three switches 54 is selected for actuation. For varying the depth of penetration the distance through which the beam is moved downwardly may be varied according to the particular switch selected. Alternatively, to the same end the time during which the cutting pressure is maintained or the applied pressure may be varied according to the switch selected.

In order to enhance the safety of the press, while still dispensing with the need for guards, provision must also be made for ensuring that the force applied by any part of the swing beam to an obstruction in its path as it swings does not exceed an acceptable value, in this case 50 Newtons. To this end, there is mounted on each side of the swing beam a sensor pad arrangement 60 see Figure 3) comprising two pads 62,64 of synthetic foam material held separated by spaced-apart ribs 66 also of compressible material. The pads 62,64 are electrically conductive and the ribs insulating, the arrangement being such that compression brings the pads into contact and in response thereto a signal can be supplied. A pad arrangement of this type is available from MAYSER GMBH & Co, of Ulm, Germany, and is identified as an Electronic Safety System. In the press in accordance with the invention now being described the pad arrangements 60 covers the whole of each side of the swing beam, each with a cut-out for its associated button 58, and also wraps around the lower edge of the beam. Each pad arrangement is 30mms thick, allowing some 20mms of movement of the swing beam after initial contact with an obstruction before it becomes "solid" with the swing beam.

During this 20mms of movement the force applied by the beam to the obstruction must be reduced to 50 Newtons (if it is previously in excess of 50 Newtons) and in any event must not exceed 50 Newtons after the pad arrangement becomes solid with the swing beam. The press thus further comprises brake means which is actuated in response to contact being made between the pads 62, 64. In the press now being described, this brake means is incorporated with the motor 48. In such press, furthermore, the compression of the pad arrangement 60 generates a signal which not only actuates the brake means as aforesaid, but also serves to discontinue the current supply to the motor 48 driving the swing beam in the selected direction and indeed to reverse the current supply so as to initiate the driving of the beam for a short time period in the opposite direction. In cutting presses having a movable cutting head which is not powered, separate brake means must of course be provided, which also act in the same manner as described above.

It will be thus appreciated that the current supply to the motor 48 must at all times be so regulated that the aforementioned conditions are achieved whereby the force of any impact of the swing beam on an obstruction in its path as it swings does not exceed 50 Newtons. To this end, therefore, the motor 48 is of a type in which the force applied thereby is proportional to the current supplied to it; in the particular case, this motor 48 is a d.c. electric motor. In order to control the turning moment of the swing beam, therefore, it is merely necessary to control the supply of current, it being of course appreciated that in the normal operation of a d.c. motor, the current will rise as the load, and thus the turning moment to overcome such load, rises. Apart from an initial period of not more than 500 milliseconds at the start of the movement of the beam under the action of the motor 48, during which period the inertia of the stationary beam has to be overcome, therefore, the current supply to the motor 48 is constantly monitored and limited to a pre-set value such that the force which the beam applies to any obstruction, e.g. the hand of the operator or third party does not exceed 50 Newtons by the time the pad arrangement 60 has been compressed and the pads 62, 64 have become solid with the swing beam. It is of course to be appreciated that this force will vary along the length of the beam from its pivot, and the limit of 50 Newtons applies through the whole of the length of the beam.

It will thus be appreciated that, using the press described above, it is possible to control the turning moment of the swing beam such that engagement of the beam with any obstruction, i.e. the hand of an operator or third party will not only not be injurious in terms of impact, but further the risk of injurious trapping is mitigated if not eliminated. Where such conditions prevail, clearly the need for additional guards, especially for preventing access to the operation locality by a third party, may be dispensed with.

## Claims

1. A cutting press comprising
   a cutting bed (12),
   a cutting head (38) movable between an operative position, in which it is in opposed relationship with a cutting die placed on the cutting bed (12), and an out-of-the-way position in which the operator has access to such cutting die, and
   drive means (28, 20) for effecting relative movement of approach between the cutting head and the cutting bed, thus to effect a cutting stroke of the press, characterised in that sensor means (60) is provided comprising, on each side the cutting head, a pad arrangement comprising two pads (62, 64) of resilient and electrically conductive material held separated by spaced-apart rib portions (66), each such pad arrangement being effective, when compressed, e.g. by engagement thereof with an obstruction in the path of movement of the cutting head (38), to make an electrical circuit and thus to generate a signal in response to which the drive means is disabled to prevent a cutting stroke of the press from being effected.

2. Cutting press according to Claim 1 wherein brake means is provided by which, in response to said signal, movement of the cutting head (38) is arrested.

3. Cutting press according to Claim 1 or Claim 2 wherein further drive means (42 to 48) is provided for effecting movement of the cutting head (38) between its operative and out-of-the-way positions, wherein in response to a signal generated as aforesaid when the cutting head (38) is being moved under the operation of the further drive means (42 to 48), such operation is discontinued.

4. Cutting press according to Claim 3 characterised in that the further drive means (42 to 48) applies a force to the cutting head (38) to move it as aforesaid, which force is such that in response to a signal being generated as aforesaid movement of the cutting head (38) under the operation of the further drive means is arrested within a distance not greater than the variation in the thickness of the pad arrangement (60) when it is compressed.

5. Cutting press according to any one of the preceding claims characterised in that the overall thickness of each pad arrangement (60) does not exceed 30mm.

Fig. 1

Fig. 2

Fig_3

European Patent Office

**EUROPEAN SEARCH REPORT**

Application Number

EP 91 31 1498

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-1 964 102 (MUEHLBACH)<br>* page 4, line 1 - page 8, line 3; figures 1-4 *<br>--- | 1-5 | B26D7/24<br>F16P3/16<br>H01H3/14 |
| Y | EP-A-0 012 383 (NICOLAISEN)<br>* page 3, line 22 - page 5, line 14; figures 1,2 *<br>--- | 1-5 | |
| A | WO-A-8 605 317 (MAYSER GMBH)<br>--- | | |
| A | FR-A-2 459 087 (LOMBARD)<br>----- | | |

TECHNICAL FIELDS
SEARCHED (Int. Cl.5)

B26D
F16P
H01H
C14B

The present search report has been drawn up for all claims

| Place of search | Date of completion of the search | Examiner |
|---|---|---|
| THE HAGUE | 08 APRIL 1992 | BERGHMANS H.F. |

EPO FORM 1503 03.82 (P0401)